# EUROPÄISCHE PATENTSCHRIFT

(11) **EP 3 383 630 B1**
(45) Veröffentlichungstag und Bekanntmachung des Hinweises auf die Patenterteilung: **11.11.2020**
(21) Anmeldenummer: 16765988.7
(22) Anmeldetag: 15.09.2016
(51) Int. Cl.: B29C 73/16, B29L 30/00

(54) **VORRICHTUNG ZUM ABDICHTEN UND AUFPUMPEN VON KRAFTFAHRZEUGREIFEN**
DEVICE FOR SEALING AND INFLATING MOTOR VEHICLE TYRES
DISPOSITIF PERMETTANT DU RENDRE ÉTANCHES ET DE GONFLER DES PNEUMATIQUES DE VÉHICULE AUTOMOBILE

(30) Priorität: 03.12.2015 DE 102015224147
(43) Veröffentlichungstag der Anmeldung: 10.10.2018
(73) Patentinhaber: Continental Reifen Deutschland GmbH, 30165 Hannover (DE)
(72) Erfinder: ZAUM, Christopher, 30926 Seelze (DE); DETERING, Rainer, 31535 Neustadt am Rbge. (DE)
(74) Vertreter: Kilsch, Armin Ralph
(86) Internationale Anmeldenummer: PCT/EP2016/071743
(87) Internationale Veröffentlichungsnummer: WO 2017/092900

(56) Entgegenhaltungen:
- EP-A1- 2 186 628
- WO-A1-2015/112267
- DE-A1-102013 113 618

## Beschreibung

Die Neuerung betrifft eine Vorrichtung zum Abdichten und Aufpumpen von Kraftfahrzeugreifen, ein so genanntes Pannenset, wobei die Vorrichtung in einem Gehäuse einen durch einen Motor, vorzugsweise einen Elektromotor angetriebenen Kompressor zur Erzeugung des Abdicht- bzw. Pumpdrucks aufweist sowie einen Anschluss für einen Dichtmittelbehälter, eine Ventil- und Verteilereinheit für Dichtmittel und Druckgas, weiterhin Verbindungsmittel aufweist, wie Schläuche und Leitungen sowie Schalt-, Steuer- und Anzeigeeinrichtungen für den Betrieb der Vorrichtung, wobei die Vorrichtung außerdem ein manuell betätigbares Druckablassventil zur Verringerung des Reifendrucks beinhaltet.

Bei Reifenpannen besteht in aller Regel das Problem, dass - wie beispielsweise bei einem PKW bisher üblich - ein gefüllter und auf einer Felge montierter Reservereifen mitgeführt werden muss, der dann anstelle des Rades mit dem defekten Reifen montiert wird, wonach der defekte Reifen in dem für den Reservereifen vorgesehenen Stauraum im Fahrzeug befestigt werden und später einer Reparatur zugeführt werden muss. Hierzu ist es nicht nur oft notwendig, ein beladenes Fahrzeug auszuräumen, um an den entsprechenden Stauraum zu gelangen, sondern es muss auch das Fahrzeug selbst mit Wagenhebern aufgebockt und eine umständliche Reparaturarbeit durchgeführt werden.

Um diese Nachteile zu vermeiden, sind bereits Reparatursätze oder Pannensets bekannt, die einen Kompressor, ein im Reifen koagulierendes Dichtmittel, meistens ein Latexmilch-Gemisch, die entsprechenden Verbindungsschläuche und die notwendigen Kabelanschlüsse zur Energiezufuhr sowie Schalter, Manometer und Bedienelement beinhalten und somit einen ständig einsetzbaren und vollständigen Reparatursatz bereitstellen, mit dem auf das Mitführen eines auf eine Felge aufgezogenen Reserverades oder auf die ständige Kontrolle anderer Reparaturmaterialien wie Schläuche, verschiedene Werkzeugschlüssel, Wagenheber etc. verzichtet werden kann.

So offenbart die DE 29812740 U1 einen Reparatursatz mit einem tragbaren Behälter zur Aufnahme von Bordwerkzeugen und Arbeitsgeräten für Fahrzeuge, insbesondere zur Aufnahme von Kompressor, Werkzeugen, Arbeitsgeräten und Zubehör zur Instandsetzung von Reifen, wobei der Behälter in Form eines Koffers ausgebildet ist und mehrere Teilräume für das Zubehör sowie Schalt-, Steuer- und Anzeigeeinrichtungen beinhaltet.

Die Bedienung solcher Reparatursätze ist aber nicht ganz einfach, insbesondere dann, wenn je nach Betriebszustand zunächst Dichtmittelbehälter und diverse Schlauchverbindungen angeschlossen oder umgebaut werden müssen. Die meisten Reparatursätze sind nämlich auch ganz gut dazu geeignet, ohne Dichtmitteleinsatz lediglich zum Aufblasen von Reifen, Schlauchbooten, Luftmatratzen, etc. eingesetzt zu werden. Aufgrund der heutzutage nur noch selten auftretenden Reifenpannen werden die Reparatursätze in der Regel häufiger für solche Freizeitzwecke gebraucht als für Notfälle. Wenn dies dann aber doch geschieht, befindet sich der Nutzer in ungewohnter und ungeübter Situation.

Zur Erleichterung der Handhabung der Geräte/Reparatursätze in solchen unterschiedlichen Anwendungen sind im Stand der Technik bereits Lösungen bekannt, die im Wesentlichen ein vereinfachtes Umschalten von der einen auf die andere Betriebsart beinhalten. Auch existieren Lösungen mit Steckverbindungen zwischen einzelnen Teilen der Geräte/Reparatursätze.

Neben dieser eigentlichen Aufgabe des Abdichtens eines beschädigten Reifens werden die beschriebenen Luftkompressoren natürlich häufig auch zur Kontrolle und ggf. Anpassung des Reifendrucks in einem unbeschädigten Reifen verwendet. In diesem Betriebszustand ist üblicherweise keine Dichtmittelflasche mit dem Anschlussstück des Luftkompressors verbunden und der hierzu vorgesehene Anschluss ist, oft durch eine Kappe, luftdicht verschlossen. So kann der Endbenutzer durch Anschluss des Luftkompressors an den Fahrzeugreifen dessen Luftdruck auf einem üblicherweise in den Luftkompressor integrierten Manometer ablesen und falls nötig den Luftdruck im Reifen durch Einschalten des Luftkompressors erhöhen.

Dies alles führt dazu, dass nicht nur im Falle von Reifenreparaturen, sondern auch bei den genannten übrigen Anwendungen neben der Erhöhung des Drucks/Reifendrucks im Praxiseinsatz natürlich auch eine Funktion zur Erniedrigung des Reifendrucks notwendig ist. Üblicherweise wird hierzu ein durch den Anwender betätigbares Ablassventil in den Luftkompressor oder in die Zuleitung zum Reifen integriert.

Im Stand der Technik ist es dabei üblich, ein Ablassventil permanent in das Leitungssystem einzubauen, so dass sich das Ablassventil durch den Nutzer/Anwender manuell in jedem Betriebszustand des Luftkompressors bedienen lässt. Da jedoch durch dieses Leitungssystem im Falle des Abdichtens einer Reifenbeschädigung auch Dichtmittel gefördert wird, kann durch unbeabsichtigtes oder in Unkenntnis erfolgendes Öffnen des Ablassventils in diesem Betriebszustand Dichtmittel unter hohem Druck in die Umgebung austreten.

Abgesehen von der möglichen Verschmutzung von Kleidungsstücken und Umgebung kann je nach vorhandener konstruktiver Anordnung des Ablassventils auch der Kompressor irreparabel beschädigt werden. Eine solche Fehlbedienung durch den Nutzer ist nicht so unwahrscheinlich, wie man vielleicht meinen möchte, da ein typischer Durchschnittsverbraucher im Umgang mit dem einzusetzenden Luftkompressor eher ungeübt ist und während der Abdichtung einer Reifenpanne durch erhöhten Stress zusätzlich abgelenkt wird.

EP 2 186 628 A1 offenbart eine Vorrichtung gemäß dem Oberbegriff des Anspruchs 1.

Für die Neuerung bestand also die Aufgabe, eine Vorrichtung zum Abdichten und Aufpumpen von Reifen mit einem Ablassventil bereitzustellen, bei der ein versehentliches Öffnen des Ablassventils ausgeschlossen ist, die also sicher zu handhaben ist, eine robuste Ausführung aufweist und dazu einfach und preisgünstig herzustellen ist.

Gelöst wird diese Aufgabe durch die Merkmale des Hauptanspruchs. Weitere vorteilhafte Ausbildungen sind in den Unteransprüchen offenbart.

Dabei ist das Druckablassventil so ausgebildet, dass bei angeschlossenem Dichtmittelbehälter und/oder während der Förderung von Dichtmittel aus dem Behälter in den Reifen eine Betätigung bzw. ein Ablassen des Drucks verhindert ist. Eine Fehlbedienung ist so mit Sicherheit verhindert und der Verbraucher gerät somit nicht in Gefahr, sich seine Kleidung oder die Umgebung zu verschmutzen oder den Kompressor zu beschädigen.

Eine vorteilhafte Weiterbildung besteht darin, dass das Druckablassventil in einem Deckel oder eine Abdeckkappe des Anschlusses für den Dichtmittelbehälter angeordnet ist und letzterer erst nach Entfernen des Deckels bzw. der Abdeckkappe anschließbar ist. Ohne ein Entfernen der Abdeckkappe ist der Betrieb des Pannensets mit Dichtmittel nicht möglich. Mit dem Entfernen der Abdeckkappe ist aber gleichzeitig auch das Druckablassventil nicht mehr vorhanden so dass dadurch eine Fehlbedienung nicht mehr möglich ist.

Eine weitere vorteilhafte Ausbildung besteht darin, dass das Druckablassventil beim Anschließen des Dichtmittelbehälters mechanisch blockiert wird. Eine mechanische Blockade kann etwa dadurch geschehen, dass durch das Einsetzen bzw. Einschrauben des Dichtmittelbehälters bestimmte Bewegungsmöglichkeiten des Ablassventils eingeschränkt oder verhindert werden, so dass eine Betätigung nicht mehr möglich ist.

Eine weitere vorteilhafte Ausbildung besteht darin, dass das Druckablassventil beim Anschließen des Dichtmittelbehälters elektrisch oder elektromechanisch blockiert wird. So können etwa durch das Einschrauben des Dichtmittelbehälters elektrischer Kontakte geschlossen werden, durch welche wiederum elektromagnetische Sperrvorrichtungen betätigt werden, die ein Auslösen des Ablassventils unmöglich machen.

Anhand eines Ausführungsbeispiels soll die Erfindung näher erläutert werden. Es zeigen
- Fig. 1: eine erfindungsgemäße Vorrichtung,
- Fig. 2: den Aufbau der Anschluss- und Verteilereinheit einer Vorrichtung nach Fig. 1 mit dem Ablassventil im Detail.

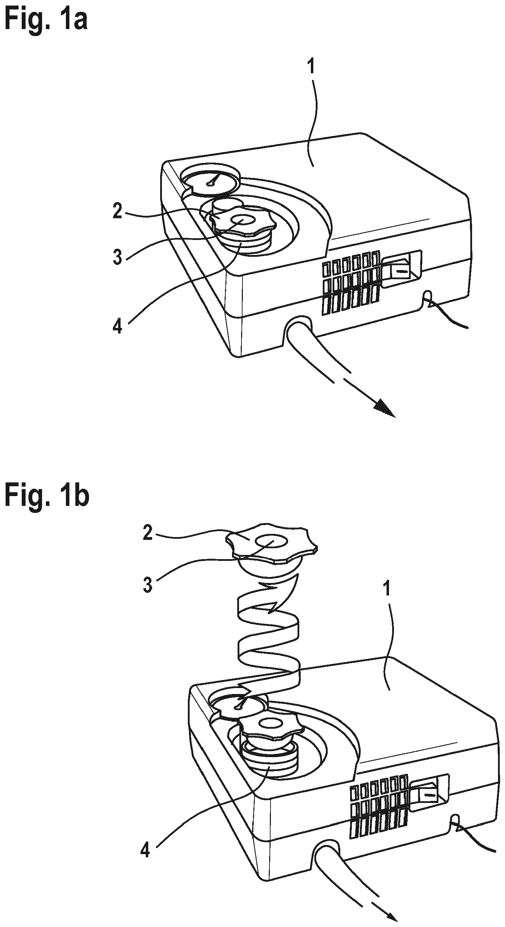

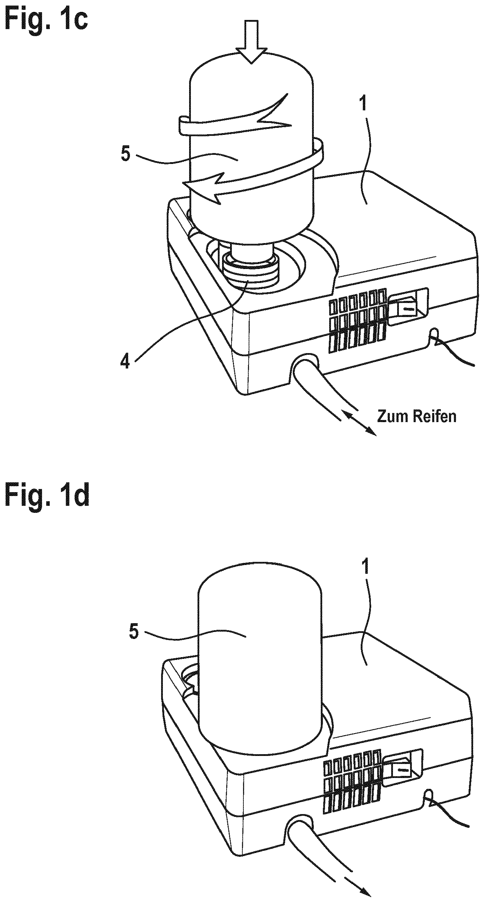

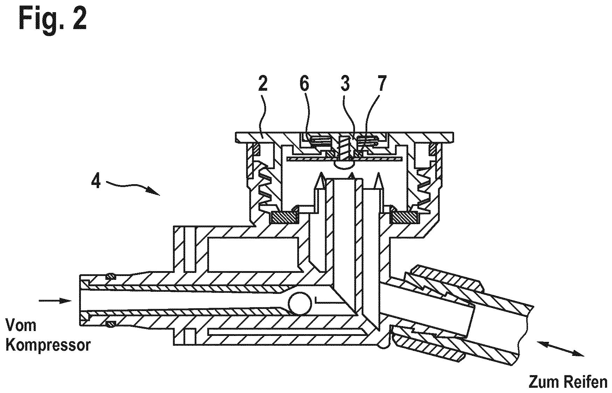

Die Fig. 1 und 2 zeigen in der Zusammenschau eine neuerungsgemäße Vorrichtung 1 zum Abdichten und Aufpumpen von Kraftfahrzeugreifen, bei der das Druckablassventil in einem Deckel oder eine Abdeckkappe des Anschlusses für den Dichtmittelbehälter angeordnet ist und letzterer erst nach Entfernen des Deckels bzw. der Abdeckkappe anschließbar ist.

In der vorliegenden neuerungsgemäßen Ausführung wird ein Luftablassventil 3 in die Abdeckkappe 2 des Dichtmittelanschlusses der Anschluss- und Verteilereinheit 4 integriert. Ohne angeschlossenen Dichtmittelbehälter 5 kann so das Luftablassventil 3 ohne Probleme vom Endbenutzer bedient werden (Fig. 1a). Das Ventil 3 ist im vorliegenden Entwurf gut sichtbar neben dem in der Vorrichtung integrierten Manometer positioniert.

Soll eine Reifenpanne abgedichtet werden, so muss ein Dichtmittelbehälter 5 an die Anschluss- und Verteilereinheit 4 des Vorrichtung 1 angeschlossen werden. Hierzu wird als erstes die Verschlusskappe 2 von der Anschluss- und Verteilereinheit 4 entfernt (Fig. 1b). Hierbei wird auch das Luftablassventil 3 mechanisch von der Vorrichtung getrennt.

Im nächsten Schritt wird der Dichtmittelbehälter 5 an die Anschluss- und Verteilereinheit 4 angeschlossen (Fig. 1c). Nun ist das System zum Abdichten des beschädigten Reifens bereit (Fig. 1d). Während des Dichtmittelförderns kann kein Dichtmittel austreten, da das Luftablassventil mit der Verschlusskappe entfernt wurde.
Nach erfolgreichem Abdichten des beschädigten Reifens wird die Anschluss- und Verteilereinheit 4 mitsamt des Dichtmittelbehälters 5 von der Vorrichtung 1 entfernt und gegen ein entsprechendes Ersatzteil ausgetauscht.

Fig. 2 zeigt den detaillierten Aufbau der Anschluss- und Verteilereinheit 4 mit Ablassventil 3 sowie der eingeschraubten Verschlusskappe 2. Durch Ausüben von Druck auf das Luftablassventils 3 wird die Feder 6 zusammengepresst und die Dichtung 7 von ihrem Sitz gehoben. Durch die entstehende Öffnung kann nun Luft aus dem angeschlossen Reifen in die Umgebung ausströmen, solange der Druck auf das Luftablassventils 3 aufrechterhalten wird.

### Bezugszeichenliste

### (Teil der Beschreibung)

- 1: Vorrichtung / Pannenset
- 2: Abdeckkappe
- 3: Luftablassventil
- 4: Anschluss- und Verteilereinheit / Ventil- und Verteilereinheit
- 5: Dichtmittelbehälter
- 6: Ventilfeder des Luftablassventils
- 7: Dichtung des Luftablassventils

## Patentansprüche

1. Vorrichtung (1) zum Abdichten und Aufpumpen von Kraftfahrzeugreifen, wobei die Vorrichtung (1) in einem Gehäuse einen durch einen Motor, vorzugsweise einen Elektromotor angetriebenen Kompressor zur Erzeugung des Abdicht- bzw. Pumpdrucks aufweist sowie einen Anschluss für einen Dichtmittelbehälter (5), eine Ventil- und Verteilereinheit (4) für Dichtmittel und Druckgas, weiterhin Verbindungsmittel aufweist, wie Schläuche und Leitungen sowie Schalt-, Steuer- und Anzeigeeinrichtungen für den Betrieb der Vorrichtung, wobei die Vorrichtung außerdem ein manuell betätigbares Druckablassventil (3) zur Verringerung des Reifendrucks beinhaltet, wobei das Druckablassventil (3) so ausgebildet ist, dass bei angeschlossenem Dichtmittelbehälter (5) und/oder während der Förderung von Dichtmittel aus dem Dichtmittelbehälter in den Reifen eine Betätigung bzw. ein Ablassen des Drucks verhindert ist,
**dadurch gekennzeichnet, dass**
das Druckablassventil beim Anschließen des Dichtmittelbehälters (5) mechanisch, elektrisch oder elektromechanisch blockiert wird.

## Claims

1. Device (1) for sealing and inflating motor vehicle tyres, wherein the device (1) has, in a housing, a compressor which is driven by a motor, preferably an electric motor, and which serves for generating the sealing or pump pressure, and said device has a connector for a sealant container (5), a valve and distributor unit (4) for sealant and pressurized gas, and furthermore connecting means such as hoses and lines, and also switching, control and display devices for the operation of the device, wherein the device furthermore comprises a manually actuatable pressure discharge valve (3) for decreasing the tyre pressure, wherein the pressure discharge valve (3) is designed such that, when the sealant container (5) is connected and/or during the delivery of sealant from the sealant container into the tyre, an actuation, or a dissipation of the pressure, is prevented,
**characterized in that**
the pressure discharge valve is mechanically, electrically or electromechanically blocked when the sealant container (5) is connected.

## Revendications

1. Dispositif (1) pour étanchéifier et gonfler des pneumatiques de véhicule automobile, le dispositif (1) présentant, dans un boîtier, un compresseur entraîné par un moteur, de préférence un moteur électrique, pour générer la pression d'étanchéité ou de pompage et présentant un raccord pour un récipient d'agent d'étanchéité (5), une unité de soupape et de distribution (4) pour l'agent d'étanchéité et le gaz sous pression, ainsi que des moyens de raccordement tels que des tuyaux et des conduites ainsi que des dispositifs de commutation, de commande et d'affichage pour le fonctionnement du dispositif, le dispositif contenant en outre une soupape de décharge de pression à commande manuelle (3) pour réduire la pression du pneumatique, la soupape de décharge de pression (3) étant réalisée de telle sorte que lorsque le récipient d'agent d'étanchéité (5) est raccordé et/ou pendant le refoulement d'agent d'étanchéité hors du récipient d'agent d'étanchéité dans le pneumatique, un actionnement ou une décharge de pression soit évité,
**caractérisé en ce que**
la soupape de décharge de pression, lors du raccordement du récipient d'agent d'étanchéité (5) est bloquée mécaniquement, électriquement ou électromécaniquement.
